# EUROPEAN PATENT SPECIFICATION

(11) **EP 1 170 931 B1**
(45) Date of publication and mention of the grant of the patent: **20.10.2004**
(21) Application number: 00124317.9
(22) Date of filing: 16.11.2000
(51) Int. Cl.: H04M 1/2745, H04Q 11/04

(54) **Method and system for terminal adapter management**
Verfahren und System zur Verwaltung einer Endgerätanpassungseinrichtung
Méthode et système pour la gestion d'adaptateur de terminal

(30) Priority: 07.07.2000 JP 2000207249
(43) Date of publication of application: 09.01.2002
(73) Proprietor: Sophia International Co., Ltd., Tokyo (JP)
(72) Inventor: Kinoshita, Kentoku, Toshima-ku, Tokyo (JP)
(74) Representative: Modiano, Guido, Dr.-Ing.

(56) References cited:
- EP-A- 0 355 714
- EP-A- 0 524 669
- DE-A- 3 721 804
- US-A- 5 974 135
- US-A- 5 983 273

## Description

### Background of the Invention

### Technical Field

The present invention relates to a terminal adapter serving as an interface between a communication terminal device and a digital communication network, and more particularly, to a method and a system for terminal adapter management capable of ensuring a proper operation of a terminal adapter of each individual user.

### Related Art

A digital communication network such as an ISDN is put into widespread use. Generally, a terminal adapter with DSU, serving as an interface, is installed between an ISDN subscriber line and an analog or digital communication terminal device such as a telephone or a computer.

When utilizing an ISDN provided by a particular communication enterprise (a particular common carrier) with which a user made a service contract, a user dials an enterprise identification number [00XX] representative of the particular common carrier, before dialing a called party's telephone number, whereby a user's terminal device is line-connected to the ISDN. Subsequently, a called party's telephone number is delivered to establish a line connection to a called party's terminal device.

To eliminate the need of inputting a common carrier identification number, communication terminal devices and terminal adapters of a type having an auto-dialing function (e.g., α-LCR function) are provided. Typically, terminal devices and terminal adapters of this type are each designed to trigger the auto-dialing function to deliver an enterprise identification number when a particular telephone number or a particular area code previously registered therein is dialed on the terminal device or a terminal device connected with the terminal adapter.

The auto-dialing function is advantageous in that it eliminates the need of inputting a common carrier identification number [00XX]. On the other hand, environment settings for the auto-dialing function are complicated, and become a burden on users, especially for a user who attempts to make settings for selectively utilizing an arbitrary one of common carriers with which the user made a service contract. As for a terminal adapter, communication environment settings of the terminal adapter are required in addition to the settings for the auto-dialing function.

When failing to make proper environment settings, most of users call up a service center of a manufacturer or a distributor to ask the service center to give a support. However, a telephone utilized to get a support is generally connected to the communication network through the terminal device in question. This makes it difficult for users to carry out the communication environment settings of the terminal device while receiving the support of the service center by telephone. For the service center, it is burdensome to confirm whether or not a caller is an authentic user. Moreover, in some cases, the service center cannot offer effective support for environment settings of terminal adapters through the medium of telephone conversation.

US-A-5,983,273 discloses a method and apparatus for supplying access to the environment and preferences associated with a particular user, represented by an internet terminal which is provided with a smart card and which is coupled to a server system.

EP-A-355 714 discloses a method for initiating communication services in terminals of a communication network.

### Summary of the Invention

An object of the present invention is to provide a method and a system for terminal adapter management, which are capable of easily determining whether a terminal adapter is owned by an authentic user and is an object to be managed and of ensuring a proper operation of a terminal adapter of each individual user.

According to one aspect of the present invention, there is provided a method for managing a terminal adapter serving as an interface between a communication terminal device and a digital communication network according to claim 1. This terminal adapter management method particularly comprises the steps of (a) receiving terminal adapter information, delivered from the terminal adapter, through the digital communication network; (b) searching a database, associated with the digital communication network, for subscriber information in accordance with a subscriber number that is received through the digital communication network; and (c) managing the terminal adapter in accordance with the subscriber information, the terminal adapter information and the subscriber number.

According to the terminal adapter management method of the present invention, terminal adapter information delivered from a terminal adapter is associated with a subscriber number, i.e., a telephone number, corresponding to a subscriber line to which the terminal adapter is connected, and subscriber information, i.e., user information, corresponding to the subscriber number. In other words, a proper user's registration can be automatically carried out. If a telephone inquiry is made through a digital communication network, a determination as to whether the caller is an authentic user, i.e., whether the terminal adapter owned by the caller is an object to be managed, can be easily made based on user's registrations, e.g., by determining whether the caller's telephone number delivered from the terminal adapter or from an exchange provided in the digital communication network when the caller's telephone is taken off-hook for telephone inquiry is coincident with any one of subscriber numbers having been registered for terminal adapter management. For an authentic user, a telephonic advice on the terminal adapter such as environment settings of the terminal adapter is offered. That is, management on the terminal adapter can be made.

In the present invention the subscriber number to be received in said step (b) is delivered from the terminal adapter or from an exchange provided in the digital communication network.

The terminal adapter information includes a product number, i.e., a manufacture's serial number, of the terminal adapter. The subscriber information includes subscriber's name and address.

Preferably, said step (c) includes assisting environment settings of the terminal adapter. For example, the environment settings include setting associated with a line-connection control function of the terminal adapter. By way of example, data items in environment setting tables provided for such a control in the terminal adapter are defined through the digital communication network while telephone conversation is made with a user through the digital communication network.

With this preferable method, an effective support such as to establish environment settings suited to user's preference or user's manner of utilization of communication network can be offered to each individual user.

Preferably, the terminal adapter management method further comprises a step (d) of dialing the subscriber number by an operator to obtain the subscriber information by telephone, if the subscriber information is not obtainable in said step (b).

With this preferred method, subscriber information can be obtained under approval of a subscriber, i.e., a terminal adapter user, even if such subscriber information is not open to the public upon request of the subscriber.

According to another aspect of the present invention, there is provided a system for managing a terminal adapter serving as an interface between a communication terminal device and a digital communication network according to claim 5. The terminal adapter management system comprises a notifying section, provided in the terminal adapter, for automatically delivering terminal adapter information to a service center through the digital communication network after installation of the terminal adapter; a search section for searching a database, associated with the digital communication network, for subscriber information in accordance with a subscriber number notified through the digital communication network; and a management section provided in the service center together with said search section, said management section being operable to manage the terminal adapter in accordance with the subscriber number, the subscriber information and the terminal adapter information.

The notifying section is adapted to fetch the subscriber number from an exchange provided in the digital communication network, and automatically deliver the subscribers number together with the terminal adapter information to the service center. The search section searches the database for the subscriber information in accordance with the subscriber number delivered from the notifying section.

Alternatively, the search section searches the database for the subscriber information in accordance with the subscriber number delivered from an exchange provided in the digital communication network to the service center, for example, when a line connection for delivery of the terminal adapter information is established between the terminal adapter and the service center.

A registration section for registering the terminal adapter information is provided in the service center. The registration section is adapted to automatically register the subscriber information searched by said search section from the database. Preferably, the registration section is adapted to permit manual input of the subscriber information. In this arrangement, if no subscriber information is available by conducting a search on the database by the search section, the subscriber information, obtained by an operator of the service center by telephone by dialing the subscriber number, may be manually input to the registration section.

In a preferred arrangement having the notifying section for fetching the subscriber number delivered from an exchange, the registration section is adapted to register the subscriber number fetched from the exchange, and the search section is adapted to read out the subscriber number registered in the registration section.

Preferably, the management section is adapted to assist environment settings for the terminal adapter through the digital communication network. More preferably, the terminal adapter has a line-connection control function for selectively achieving an arbitrary one of a direct-dialing function, an auto-dialing function and a routing function. The management section is adapted to assist settings associated with the line-connection control function of the terminal adapter.

According to a terminal adapter management system of the present invention, whether a terminal adapter is an object to be managed can be easily determined, and a proper operation of a terminal adapter of each individual user can be ensured.

### Brief Description of the Drawings

Fig. 1 is a block diagram showing a terminal adapter of a terminal adapter management system according to an embodiment of the present invention;
Fig. 2 is a view showing, by way of example, a routing table provided in the terminal adapter shown in Fig. 1;

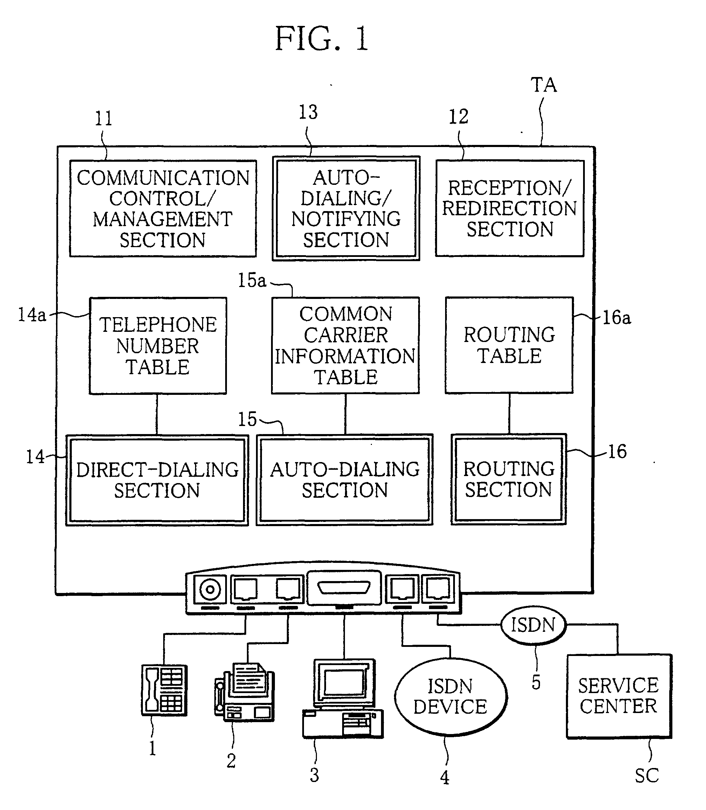

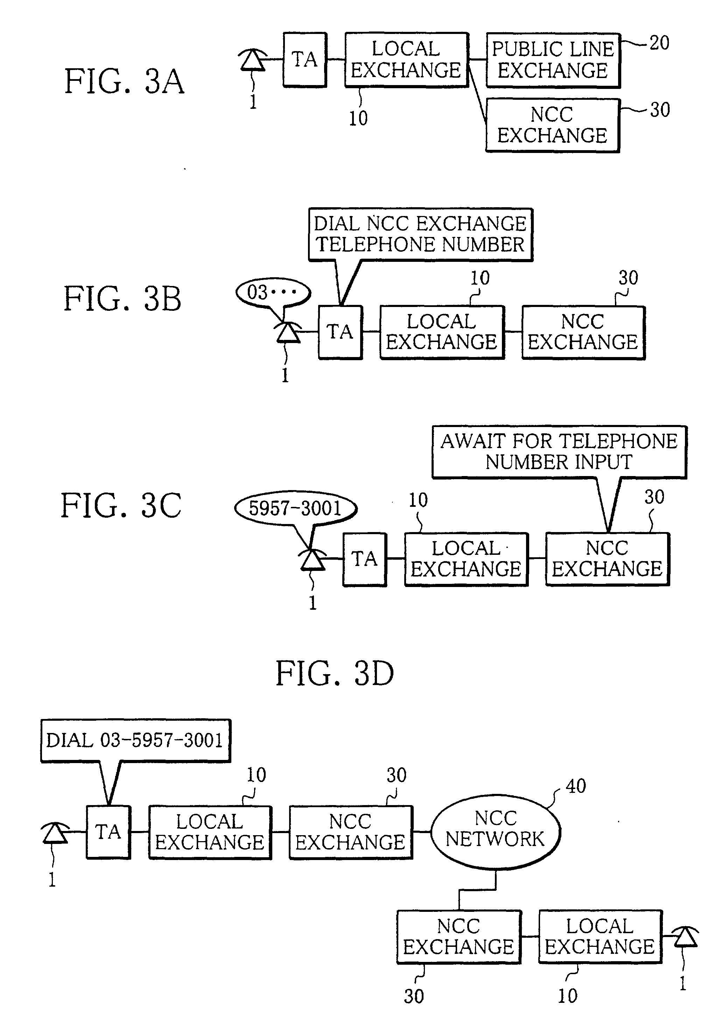

Figs. 3A-3D are views showing line-connection processes based on a priority-connection establishing function of the terminal adapter shown in Fig. 1, wherein Fig. 3A shows connections between the terminal adapter, a telephone, a subscriber line, a public network exchange, and an NCC exchange, Fig. 3B shows a state where an NCC exchange telephone number is delivered from the terminal adapter when an area code is dialed on the telephone, Fig. 3C shows a state where the NCC exchange is on standby for telephone number input, and Fig. 3D shows a line connection between the telephone connected to the terminal adapter and a called party's telephone;
Fig. 4A is part of a flowchart showing terminal adapter management processes in the terminal adapter management system; and
Fig. 4B is the remainder of the flowchart, which follows Fig. 4A.

### Detailed Description

With reference to the accompanied drawings, a terminal adapter management system according to an embodiment of the present invention will be explained.

The terminal adapter management system of this embodiment comprises a number of terminal adapters connected to an ISDN (more generally a digital communication network), and one or more service centers for remotely managing these terminal adapters through the ISDN.

As shown in FIG. 1, each terminal adapter TA, serving as an interface between one or more user's telecommunication terminal devices and the ISDN subscriber line, has an input/output terminal section thereof adapted to be connected to the user's terminal devices and the subscriber line.

More specifically, in this embodiment, the input/output terminal section includes a first analog port TEL-1 to which an analog terminal device such as a telephone 1 is connected, a second analog port TEL-2 to which another analog terminal device such as a facsimile 2 is connected, a data port TS-232C to which a personal computer 3 is connected, an S port S-I/F to which a terminal adapter, other than the terminal adapter TA, or an ISDN device 4 is connected, and a line port U-I/F to which an ISDN subscriber line is connected. Thus, the user's terminal devices 1-4 are connected to the ISDN 5 through the terminal device TA.

The terminal adapter TA comprises a communication control/management section 11, a reception/redirection section 12, and an auto-dialing/notifying section 13. The control/management section 11 performs a communication control (line-connection control) based on a selected one of direct-dialing, auto-dialing and routing functions, mentioned below, of the terminal adapter TA when the terminal device 1, 2, 3 or 4 is taken off-hook, the selected function being determined in accordance with environment settings of the terminal adapter TA. The reception/redirection section 12 performs an incoming call control in which a selected one of the terminal devices 1-4 is caused to ring or one or more terminal devices 1-4 are caused to ring in a priority order, and controls redirection of calls between the terminal devices 1-4. The dialing/notifying section 13 automatically dials a specific service center SC after the installation of the terminal adapter TA and notifies the service center SC of terminal adapter information, such as a product number, proper to the terminal adapter TA, and a subscriber number (telephone number) assigned to the subscriber line of the ISDN 5.

The terminal adapter TA further comprises a direct-dialing section (fixed-connection establishing section) 14, an auto-dialing section (line-selecting section) 15, and a routing section (priority-connection establishing section) 16, and selectively achieves an arbitrary one of these three functions. As explained above, the selection of one of the functions is carried out in accordance with environment settings of the terminal adapter TA under the control of the control/management section 11. In this regard, the terminal adapter is provided with various tables including the below-mentioned tables 14a, 15a and 16a. These tables may be configured in the same manner as tables comprised of various data items as described in Japanese patent application no. 2000-104948 filed by the present applicant on April 6, 2000 and hereby incorporated by reference into the present specification.

The direct-dialing section 14 has functions of detecting the terminal device 1, 2, 3 or 4, e.g., the telephone 1, being taken off-hook and of automatically dialing a called party's telephone number registered in advance in a telephone number table 14a. To dial the called party's telephone number, the direct-dialing section 14 may execute a telephone number delivery program similar to that described in Japanese patent application no. 2000-104948. This direct-dialing function, which is triggered when, e.g., the handset of the telephone 1 is taken off-hook, is utilized as a telephone for emergency contact with a caregiving center or the like, a telephone located near ATMs in a bank for permitting an ATM user to contact with bank personnel upon failure of an ATM, or a telephone to be connected to an access point of an internet provider, for instance.

The auto-dialing section 15 has functions of automatically selecting a communication network to be utilized in accordance with structured toll information that is registered in advance in a common carrier information table 15a and of dialing, prior to delivery of a called party's telephone number, a carrier identification number [00XX] corresponding to the selected communication network. This auto-dialing function (line-selecting function), which is a developed version of a known α-LCR function, includes a function of comparing tolls regarding a plurality of communication networks, which tolls vary depending on time zone or the like, while referring to the carrier information table 15a, thereby selecting the lowest-cost communication network. When an identification number [00XX] corresponding to the lowest-cost communication network is dialed by the auto-dialing function, the routing function of the local exchange is triggered so that an attempt is made to establish a line connection through the lowest-cost communication network. For communication-line selection and auto-dialing, the auto-dialing section 15 may execute a telephone number delivery program similar to that described in Japanese patent application no. 2000-104948.

Preferably, the registration of structured toll information to the carrier information table 15a is conducted under the control of the service center SC. More specifically, as in the case of Japanese patent application no. 2000-104948, the service center SC may organize toll schedules of a large number of communication networks provided by various common carriers, and may newly register or renew the structured toll information in the information table 15a by mean of remote access through the medium of communication network during a time zone in which the user does not utilize the terminal adapter A, if any one of the common carriers changes its toll schedule.

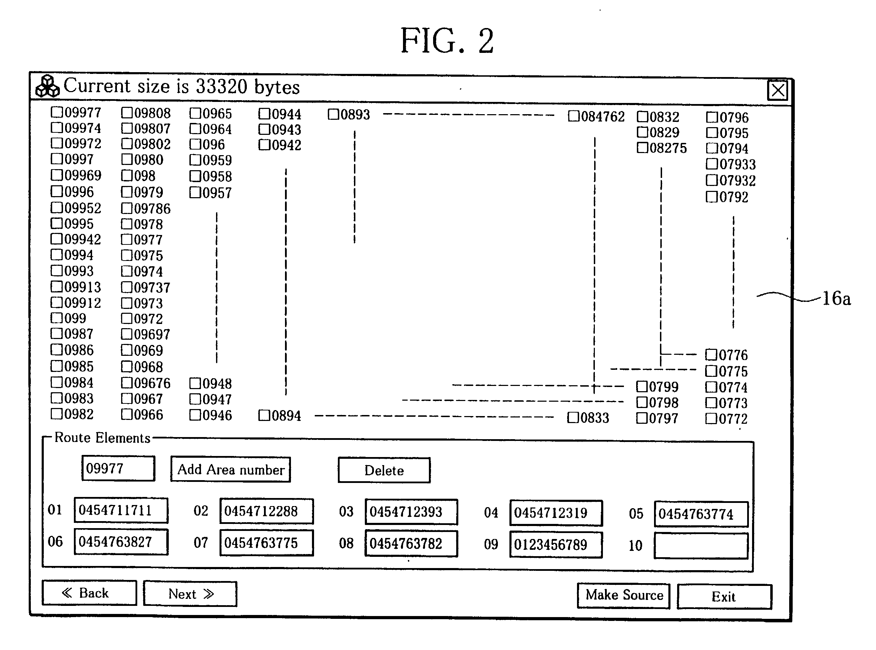

The routing section (priority-connection establishing section) 16 has a function of establishing a priority-connection, i.e., a carrier-selecting function, by which a communication network is selected in accordance with search information registered in advance in a routing table 16a shown in Fig. 2 and an attempt is made to establish a line connection to a called party's terminal device through the selected communication network.

For instance, the routing table 16a is comprised of a table that is five pages in total. Two hundred retrieval numbers may be set in each page of the routing table, and ten NCC exchange telephone numbers, at the most, may be registered for every retrieval number. Each retrieval number may be a toll area code for national call, a country code for international call, or a toll-free dial number.

The routing section or priority-connection establishing section 16 searches the routing table 16a in accordance with a retrieval number input through, e.g., the telephone 1, to find and dial a telephone number having the highest priority among telephone numbers corresponding to the retrieval number and registered in advance in the routing table 16a in priority order. If a called party's terminal device is busy or a line connection thereto is rejected, the routing section 16 determines and dials a telephone number having the next higher priority in the routing table 16a. Ordinarily, a line connection to a called party's terminal device, corresponding to any one of, e.g., ten telephone numbers registered in the routing table 16a in association with each retrieval number, is established.

In the routing table 16a of the present embodiment, telephone numbers of exchanges (hereinafter referred to NCC exchanges), provided in communication networks respectively provided by a plurality of common carriers with which the user made a service contract, are registered. Thus, by dialing a telephone number selected from the routing table 16a, an attempt is made to directly establish a line connection to an NCC exchange, without leaving line-connection control to the routing action of a local exchange based on a carrier identification number [00XX]. After a line connection to an NCC exchange is established, a called party's telephone number temporarily stored in a memory, not shown, is delivered to the NCC exchange, so that a line connection to a called party's terminal device may be established by means of exchange service offered by the NCC exchange.

In the following, a further explanation is given as to how a particular communication network is utilized based on the priority-connection establishing function of the routing section 16.

As shown by way of example in Fig. 3A, the telephone 1 is adapted to be connected through the terminal adapter TA to the local exchange 10 which is in turn connectable with any one of a public line exchange 20 and NCC exchanges (one of which is shown by reference numeral 30). Here, it is assumed that a plurality of NCC exchange telephone numbers are registered in the routing table 16a of the terminal adapter TA in a manner they are associated with a toll area code [03] serving as a retrieval number.

In this case, when the area code [03] is input through, e.g., the telephone 1, the routing section 16 of the terminal adapter TA searches the routing table 16a using the input area code [03] as the retrieval number, to select one of NCC exchange telephone numbers registered in the routing table 16a, and dials the selected NCC exchange telephone number as shown in Fig. 3B. As a result, an attempt is made to establish a line connection between the terminal adapter TA and the NCC exchange 30, without leaving a carrier-selecting control to the local exchange 10. When the line connection to the NCC exchange 30 is established, the NCC exchange 30 is in a standby state to await for input of a called party's telephone number from the terminal adapter TA, as shown in Fig. 3C.

When a called party's telephone number, e.g., [5957-3001] is dialed following the area code [03], the terminal adapter TA dials the area code [03] and the called party's telephone number [5957-3001] in this order. At this time, the line connection between the NCC exchange 30 and the terminal adapter TA is already established, so that the dial information [03-5957-3001] is given to the NCC exchange 30 through the local exchange 10. In other words, a line connection control is performed by the routing function of the terminal adapter TA, without leaving the control to the local exchange 10, in establishing a line connection between the terminal adapter TA and the called party's telephone 1 through the NCC exchange 30, the NCC communication network 40, and the NCC exchange 30 and the local exchange 10, as shown in Fig. 3D, the two later exchanges being provided in the NCC communication network 40 on the called party's side.

As learned from the foregoing explanations on the terminal adapter TA of this embodiment, terminal adapters have a tendency to have a variety of advanced functions, so that communication environment settings of a terminal adapter required for each individual user to effectively utilize these functions become complicated. Moreover, even though terminal adapters may be improved to make communication environment settings with ease, it is considered that each user may encounter a difficulty in determining in what way these advanced functions should be utilized to attain merits in using his or her terminal adapter.

Under these circumstances, the terminal adapter management system of this embodiment comprises terminal adapters TA each provided with an auto-dialing/notifying function. This makes it possible for each terminal adapter TA to automatically dial a telephone number of a specific service center SC and notify the service center SC of terminal adapter information, such as a product number, proper to each terminal adapter TA and a subscriber number (telephone number) assigned to an ISDN subscriber line concerned. In line with the terminal adapter information and the subscriber number that are notified from each terminal device TA, the service center SC makes user's registration and provision for user assistance.

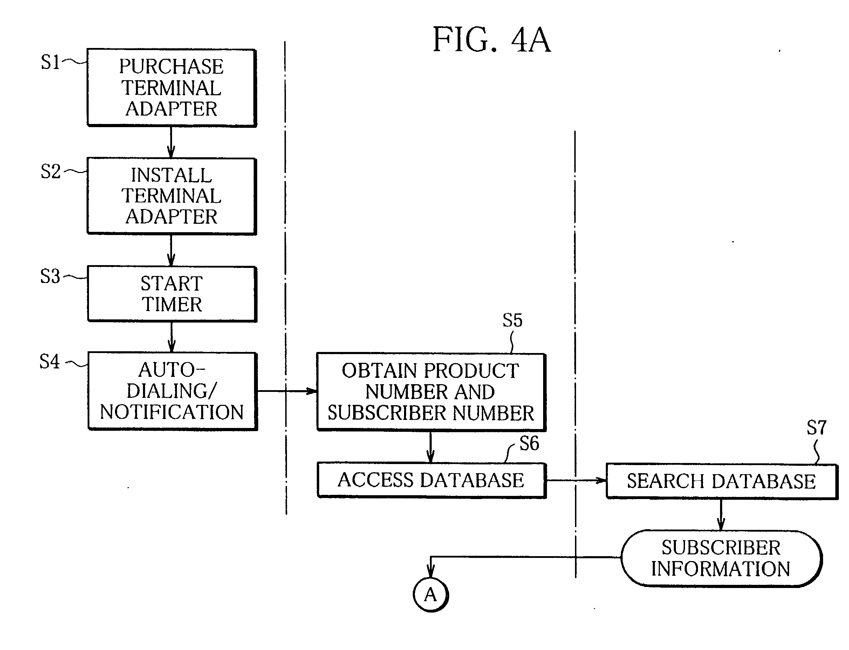

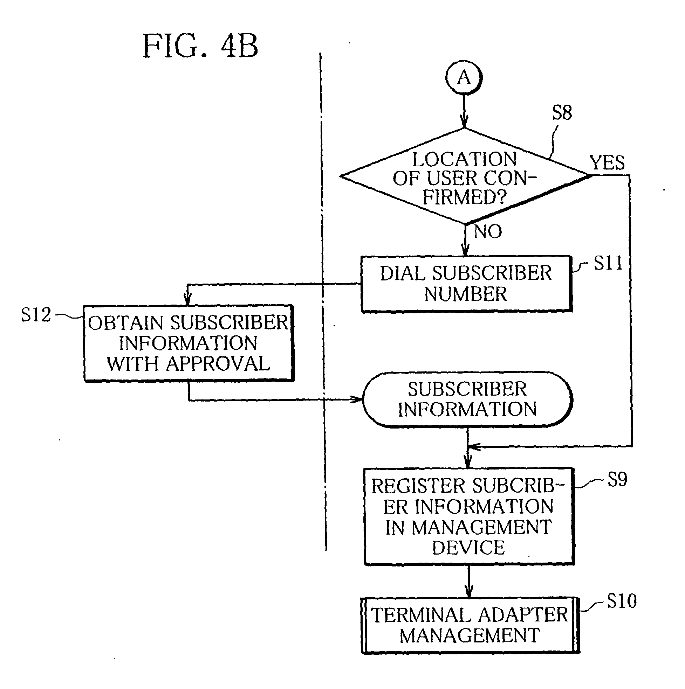

In the following, a process for terminal adapter management performed by the terminal adapter management system of this embodiment will be explained with reference to Figs. 4A and 4B.

A terminal adapter TA purchased by a user is installed at his or her home (steps S1 and S2). That is, the terminal adapter TA is connected to terminal devices 1-4 and the ISDN subscriber line, and the power of the terminal adapter TA is turned on. In response to this, the dialing/notifying section 13 of the terminal adapter TA starts a timer (not shown) accommodated therein. When a predetermined time period (several minutes to one hour, for instance) has elapsed from the time the terminal adapter TA was installed (step S3), the auto-dialing/notifying section 13 automatically dials the telephone number of the service center SC and notifies the service center of the product number of the terminal adapter TA and the subscriber number (step S4).

The dialing/notifying section 13 of this embodiment operates to fetch the subscriber number that is delivered from the local exchange when the auto-dialing is made and to deliver the fetched subscriber number to the service center SC together with the product number (manufacture's serial number) read out from a built-in memory (not shown). Alternatively, the dialing/notifying section 13 may notify the service center of the product number alone, since the subscriber number is delivered to the service center from the local exchange at the time of auto-dialing.

The auto-dialing/notification is performed under a condition that the terminal adapter 10 is not used by the user for telecommunication. To avoid telecommunication toll from incurring, the service center may have a toll-free dial which serves as a telephone number for the auto-dialing/notification. If a line connection to the service center SC via such a toll-free network cannot be established, redialing is repeated at intervals of an appropriate waiting time until a line connection is established.

After obtaining the production number and the subscriber number (step S5), the service center 3 accesses a database (telephone directory) of a local exchange corresponding to the subscriber number (step S6). Whereupon the service center SC searches the telephone directory to obtain subscriber information such as the name and address of a subscriber corresponding to the subscriber number (step S7). If such subscriber information is not open to the public under the contract between the common carrier and the subscriber, no subscriber information is available from the telephone directory.

Next, the service center SC determines whether or not the location of the user is confirmed (step S8). If the subscriber's name and address have been obtained by the search of the telephone directory, it is determined that the location of the user is confirmed. In this case, the service center registers the subscriber information (user information) including the subscriber's name and address in a user management device such as a host computer of the service center, together with the production number of the terminal adapter and the user's telephone number (step S9). Whereupon, management services for the terminal adapter TA are carried out (step S10).

On the other hand, if it is determined in step S8 that the location of the user is not confirmed, an operator of the service center SC dials the subscriber number notified from the terminal adapter TA (step S11). The operator explains the person or the user who answers the phone that the service center wishes to conduct formalities required to guarantee the terminal adapter TA, and obtains the user information (subscriber information), including the user's name and address, directly from him or her with approval (step S12).

The service center SC registers the thus obtained subscriber information in the user management device together with the production number and the subscriber number (step S9), and carries out terminal adapter management services (step S10).

As explained above, in the terminal adapter management system of this embodiment, a service center SC obtains terminal adapter information and a subscriber number that are delivered from each terminal adapter TA by means of the autodialing/notifying function, and searches a database of a subscriber exchange in accordance with the obtained subscriber number to thereby obtain subscriber information that can be registered as reliable user information in the service center. According to this management system, the service center is enabled to make a preparation for giving supports to realize proper operations of individual terminal adapters, without causing a burden on individual users. When no subscriber information is available from a database, user's registration can be made based on subscriber information obtained by telephone from each user with his or her approval.

Thus, the terminal adapter management system of this embodiment can eliminate a burden in conventional user's registration such that a written guarantee filled with distributor's name and distribution date is handed over to a purchaser of a terminal adapter and the purchaser sends back the written guarantee after filling out necessary information.

The subscriber number (user's telephone number) automatically delivered from a terminal adapter installed at the user's home corresponds to the subscriber line to which the terminal adapter is connected, and is thus useable as reliable user's registration information. When a request for support is made by telephone, it is possible to immediately easily determine whether a caller who requests a support is an authentic user of a terminal adapter to be subject to support, by confirming whether a caller's telephone number notified from the terminal adapter or the local exchange coincides with any one of registered user's telephone numbers.

A user sometimes requests a support for such a reason that environment settings of a terminal adapter, especially, the settings in respect of the line-connection control function, i.e. , the direct-dialing, auto-dialing and routing functions, of a terminal adapter are complicated. In this case, a service center can offer an appropriate support. More specifically, an operator of the service center may input control/setting commands to a microprocessor, constituting a primary part of the terminal adapter, through a data channel of an ISDN, while making a telephone conversation with the user through a voice channel of the ISDN, whereby the service center can make environment settings for the terminal adapter instead of the user. That is, as in the case of Japanese patent application no. 2000-104948, a number of data items in various tables for environment settings of the terminal adapter are set appropriately through the ISDN.

A service center may organize toll schedules of a large number of common carriers, and, based on the organized toll schedules, may offer each individual user a suggestion about a proper utilization of a terminal adapter to bring out merits of the terminal adapter. When the user asks the service center to reestablish the environment settings that are needed if the manner of adapter utilization is changed, the service center may offer serves as in the case of the aforementioned environment setting service.

The present invention is not limited to the foregoing embodiment, and may be modified in various manners.

For instance, a service center may obtain date/time information when terminal adapter information and a subscriber number are automatically delivered from a terminal adapter, and may manage a support time period of the terminal adapter based on the thus obtained date/time information. Further, the service center may monitor environment settings of registered terminal adapters and give users some advice on more preferable environment settings.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A terminal adapter management method for managing a terminal adapter (TA) serving as an interface between a communication terminal device (1, 2, 3, 4) and a digital communication network (5), comprising steps of
receiving terminal adapter information, delivered from the terminal adapter (TA), through the digital communication network (5);
searching a database, associated with the digital communication network (5), for subscriber information in accordance with a subscriber number that is received through the digital communication network, in which the subscriber number is delivered from the terminal adapter (TA) or from an exchange provided in the digital communication network (5); and
managing (S10) the terminal adapter (TA) in accordance with the subscriber information, the terminal adapter information and the subscriber number, in which the terminal adapter information includes a product number of the terminal adapter, and the subscriber information includes subscriber's name and address
**characterized in that** the method comprises the steps of:
fetching (S5) the subscriber number from the exchange provided in the digital communication network (5) and automatically delivering the subscriber number together with the terminal adapter information to a service center (SC);
searching (S7) the database for the subscriber information in accordance with the subscriber number delivered from the exchange provided in the digital communication network (5) to the service center (SC); and
registering (S10) the terminal adapter information and the subscriber information searched from the database thereby to manage itself in accordance with the subscriber number, the subscriber information and the terminal adapter information.

2. The terminal adapter management method according to claim 1, further comprising the step:
performing environment settings based on a line-connection control function of the terminal adapter (TA).

3. The terminal adapter management method according to claim 1, further comprising the step of:
dialing the subscriber number by an operator to obtain the subscriber information by telephone, if the subscriber information is not obtainable

4. The terminal adapter management method according to claim 2, wherein the environment setting includes assisting settings associated with the line-connection control function of the terminal adapter.

5. A terminal adapter management system for managing a terminal adapter (TA) serving as an interface between a communication terminal device (1, 2, 3, 4) and a digital communication network (5) including
a notifying section (13), provided in the terminal adapter (TA), for automatically delivering terminal adapter information to a service center (SC) through the digital communication network (5) after installation of the terminal adapter (TA);
a search section for searching a database, associated with the digital communication network (5), for subscriber information in accordance with a subscriber number notified through the digital communication network (5); and
a management section (11) provided in the service center (SC) together with said search section, said management section (11) being operable to manage the terminal adapter (TA) in accordance with the subscriber number, the subscriber information and the terminal adapter information,
**characterized in that** the notifying section (13) is adapted to fetch the subscriber number from an exchange provided in the digital communication network (5), and automatically deliver the subscriber number together with the terminal adapter information to the service center (SC); the search section is adapted to search the database for the subscriber information in accordance with the subscriber number delivered from the notifying section (13) and the management section (11) is adapted to enable a registration section of the service center to automatically register the terminal adapter information provided in the service center (SC) and the subscriber information searched by said search section from the database thereby to manage the terminal adapter (TA) in accordance with the subscriber number, the subscriber information and the terminal adapter information.

6. The terminal adapter management system according to claim 5, wherein the search section searches the database for the subscriber information in accordance with the subscriber number delivered from an exchange provided in the digital communication network (5) to the service center when a line connection for delivery of the terminal adapter information is established between the terminal adapter and the service center.

7. The terminal adapter management system according to claim 5, wherein the registration section is adapted to permit manual input of the subscriber information.

8. The terminal adapter management system according to claim 1, wherein the terminal adapter (TA) has a line-connection control function for selectively achieving an arbitrary one of a direct-dialing function (14), an auto-dialing function (15) and a routing function (16); and the management section (11) is adapted to assist settings associated with the line-connection control function of the terminal adapter (TA).

## Patentansprüche

1. Ein Verwaltungsverfahren für einen Terminaladapter zum Verwalten eines Terminaladapters (TA), der als eine Schnittstelle zwischen einem Kommunikationsendgerät (1, 2, 3, 4) und einem digitalen Kommunikationsnetz (5) dient, das die folgenden Schritte umfasst:
Empfangen von Terminaladapterinformation, die vom Terminaladapter (TA) geliefert wird, über das digitale Kommunikationsnetz (5);
Durchsuchen einer Datenbank, die mit dem digitalen Kommunikationsnetz (5) verbunden ist, nach Teilnehmerinformation gemäß einer Teilnehmernummer, die über das digitale Kommunikationsnetz empfangen wird, in das die Teilnehmernummer aus dem Terminaladapter (TA) oder aus einer Vermittlung geliefert wird, die im digitalen Kommunikationsnetz (5) bereitgestellt wird; und
Verwalten (S10) des Terminaladapters (TA) gemäß der Teilnehmerinformation, der Terminaladapterinformation und der Teilnehmernummer, in der die Terminaladapterinformation eine Produktnummer des Terminaladapters und die Teilnehmerinformation den Namen und die Adresse des Teilnehmers einschließt,
**dadurch gekennzeichnet, dass** das Verfahren die folgenden Schritte umfasst:
Holen (S5) der Teilnehmernummer aus der Vermittlung, die in dem digitalen Kommunikationsnetz (5) bereitgestellt wird, und automatische Zustellung der Teilnehmernummer zusammen mit der Terminaladapterinformation an ein Dienstleistungszentrum (SC);
Durchsuchen (S7) der Datenbank nach der Teilnehmerinformation gemäß der Teilnehmernummer, die aus der Vermittlung, die im digitalen Kommunikationsnetz (5) bereitgestellt wird, an das Dienstleistungszentrum (SC) geliefert wurde; und
Registrieren (S10) der Terminaladapterinformation und der Teilnehmerinformation, die dort aus der Datenbank gesucht wurde, um dabei sich selbst gemäß der Teilnehmernummer, der Teilnehmerinformation und der Terminaladapterinformation zu verwalten.

2. Das Verwaltungsverfahren für einen Terminaladapter gemäß Anspruch 1, ferner den folgenden Schritt umfassend:
Ausführen von Umgebungseinstellungen, die auf einer Leitungsanschluss-Steuerfunktion des Terminaladapters (TA) basieren.

3. Das Verwaltungsverfahren für einen Terminaladapter gemäß Anspruch 1, ferner den folgenden Schritt umfassend:
Wählen der Teilnehmernummer durch einen Betreiber, um die Teilnehmerinformation über das Telefon zu erhalten, wenn die Teilnehmerinformation nicht erhältlich ist.

4. Das Verwaltungsverfahren für einen Terminaladapter gemäß Anspruch 2, worin die Umgebungseinstellung eine Hilfe einschließt, die mit der Leitungsanschluss-Steuerfunktion des Terminaladapters verbunden ist.

5. Ein Verwaltungssystem für einen Terminaladapter zum Verwalten eines Terminaladapters (TA), der als eine Schnittstelle zwischen einem Kommunikationsendgerät (1, 2, 3, 4) und einem digitalen Kommunikationsnetz (5) dient, das folgendes einschließt:
ein Mitteilungsteil (13), der im Terminaladapter (TA) bereitgestellt wird, zum automatischen Liefern von Terminaladapterinformation an ein Dienstleistungszentrum (SC) über das digitale Kommunikationsnetz (5) nach der Installation des Terminaladapters (TA);
ein Suchteil zum Durchsuchen einer Datenbank, die mit dem digitalen Kommunikationsnetz (5) verbunden ist, nach Teilnehmerinformation gemäß einer Teilnehmernummer, die über das digitale Kommunikationsnetz (5) mitgeteilt wurde; und
ein Verwaltungsteil (11), das im Dienstleistungszentrum (SC) zusammen mit dem Suchteil bereitgestellt wird, wobei das Verwaltungsteil (11) betreibbar ist, den Terminaladapter (TA) gemäß der Teilnehmernummer, der Teilnehmerinformation und der Terminaladapterinformation zu verwalten,
**dadurch gekennzeichnet, dass** das Mitteilungsteil (13) derart ausgestaltet ist, dass es die Teilnehmernummer aus einer Vermittlung holt, die im digitalen Kommunikationsnetz (5) bereitgestellt wird, und die Teilnehmernummer zusammen mit der Terminaladapterinformation automatisch an das Dienstleistungszentrum (SC) liefert; wobei das Suchteil derart ausgestaltet ist, dass es die Datenbank nach der Teilnehmerinformation gemäß der Teilnehmernummer durchsucht, die aus dem Mitteilungsteil (13) geliefert wurde, und wobei das Verwaltungsteil (11) derart ausgestaltet ist, dass es einem Registrierungsteil des Dienstleistungszentrums ermöglicht, die Terminaladapterinformation, die im Dienstleistungszentrum (SC) bereitgestellt wird, und die Teilnehmerinformation, die vom Suchteil aus der Datenbank gesucht wurde, automatisch zu registrieren und dadurch den Terminaladapter (TA) gemäß der Teilnehmernummer, der Teilnehmerinformation und der Terminaladapterinformation zu verwalten.

6. Das Verwaltungssystem für einen Terminaladapter gemäß Anspruch 5, worin das Suchteil die Datenbank nach der Teilnehmerinformation gemäß der Teilnehmernummer durchsucht, die aus einer Vermittlung, die im digitalen Kommunikationsnetz (5) bereitgestellt wird, an das Dienstleistungszentrum geliefert wurde, wenn ein Leitungsanschluss zur Lieferung der Terminaladapterinformation zwischen dem Terminaladapter und dem Dienstleistungszentrum errichtet wird.

7. Das Verwaltungssystem für einen Terminaladapter gemäß Anspruch 5, worin das Registrierungsteil derart ausgestaltet ist, dass es eine manuelle Eingabe der Teilnehmerinformation gestattet.

8. Das Verwaltungssystem für einen Terminaladapter gemäß Anspruch 1, worin der Terminaladapter (TA) eine Leitungsanschluss-Steuerfunktion zum selektiven Erreichen einer willkürlichen Funktion einer Direktwahlfunktion (14), einer Selbstwahlfunktion (15) und einer Leitweglenkungsfunktion (16) besitzt; und das Verwaltungsteil (11) derart ausgestaltet ist, dass es Einstellungen hilft, die mit der Leitungsanschluss-Steuerfunktion des Terminaladapters (TA) verbunden sind.

## Revendications

1. Procédé de gestion d'adaptateur de terminal pour gérer un adaptateur de terminal (TA) servant d'interface entre un dispositif de terminal de communication (1, 2, 3, 4) et un réseau de communications numériques (5), comportant les étapes consistant à :
recevoir des informations concernant l'adaptateur de terminal, délivrées par l'adaptateur de terminal (TA), via le réseau de communications numériques (5),
rechercher dans une base de données, associée au réseau de communications numériques (5), des informations concernant un abonné conformément à un numéro d'abonné qui est reçu via le réseau de communications numériques, le numéro d'abonné étant délivré par l'adaptateur de terminal (TA) ou par un central téléphonique agencé dans le réseau de communications numériques (5), et
gérer (S10) l'adaptateur de terminal (TA) conformément aux informations concernant l'abonné, aux informations concernant l'adaptateur de terminal et au numéro d'abonné, les informations concernant l'adaptateur de terminal incluant un numéro de produit de l'adaptateur de terminal, et les informations concernant l'abonné incluant le nom et l'adresse de l'abonné,
**caractérisé en ce que** le procédé comporte les étapes consistant à :
extraire (S5) le numéro d'abonné du central téléphonique agencé dans le réseau de communications numériques (5) et délivrer automatiquement le numéro d'abonné conjointement avec les informations concernant l'adaptateur de terminal à un centre de services (SC),
rechercher (S7) dans la base de données des informations concernant l'abonné conformément au numéro d'abonné délivré par le central téléphonique agencé dans le réseau de communications numériques (5) au centre de services (SC), et
enregistrer (S10) les informations concernant l'adaptateur de terminal et les informations concernant l'abonné recherchées dans la base de données de manière à gérer celle-ci conformément au numéro d'abonné, aux informations concernant l'abonné et aux informations concernant l'adaptateur de terminal.

2. Procédé de gestion d'adaptateur de terminal selon la revendication 1, comportant en outre l'étape consistant à :
effectuer des paramétrages concernant l'environnement sur la base d'une fonction de commande de connexion de ligne de l'adaptateur de terminal (TA).

3. Procédé de gestion d'adaptateur de terminal selon la revendication 1, comportant en outre l'étape consistant à :
composer le numéro d'abonné par l'intermédiaire d'un opérateur afin d'obtenir les informations concernant l'abonné par téléphone, si les informations concernant l'abonné ne peuvent pas être obtenues.

4. Procédé de gestion d'adaptateur de terminal selon la revendication 2, dans lequel le paramétrage concernant l'environnement inclut un paramétrage d'assistance associé à la fonction de commande de connexion de ligne de l'adaptateur de terminal.

5. Système de gestion d'adaptateur de terminal pour générer un adaptateur de terminal (TA) servant d'interface entre un dispositif de terminal de communication (1, 2, 3, 4) et un réseau de communications numériques (5) comportant
une section de notification (13), agencée dans l'adaptateur de terminal (TA), pour délivrer automatiquement des informations concernant l'adaptateur de terminal à un centre de services (SC) via le réseau de communications numériques (5) après l'installation de l'adaptateur de terminal (TA),
une section de recherche pour rechercher dans une base de données, associée au réseau de communications numériques (5), des informations concernant un abonné conformément à un numéro d'abonné notifié via le réseau de communications numériques (5), et
une section de gestion (11) agencée dans le centre de services (SC) conjointement avec ladite section de recherche, ladite section de gestion (11) pouvant être utilisée pour gérer l'adaptateur de terminal (TA) conformément au numéro d'abonné, aux informations concernant l'abonné et aux informations concernant l'adaptateur de terminal,
**caractérisé en ce que** la section de notification (13) est adaptée pour extraire le numéro d'abonné d'un central téléphonique agencé dans le réseau de communications numériques (5), et délivrer automatiquement le numéro d'abonné conjointement avec les informations concernant l'adaptateur de terminal au centre de services (SC), la section de recherche est adaptée pour rechercher dans la base de données les informations concernant l'abonné conformément au numéro d'abonné délivré par la section de notification (13) et la section de gestion est adaptée pour activer une section d'enregistrement du centre de services afin d'enregistrer automatiquement les informations concernant l'adaptateur de terminal fournies dans le centre de services (SC) et les informations concernant l'abonné recherchées par ladite section de recherche dans la base de données de manière à gérer l'adaptateur de terminal (TA) conformément au numéro d'abonné, aux informations concernant l'abonné et aux informations concernant l'adaptateur de terminal.

6. Système de gestion d'adaptateur de terminal selon la revendication 5, dans lequel la section de recherche recherche dans la base de données des informations concernant l'abonné conformément au numéro d'abonné délivré par un central téléphonique agencé dans le réseau de communications numériques (5) au centre de services lorsqu'un connexion de ligne en vue de délivrer les informations concernant l'adaptateur de terminal est établi entre l'adaptateur de terminal et le centre de services.

7. Système de gestion d'adaptateur de terminal selon la revendication 5, dans lequel la section d'enregistrement est adaptée pour autoriser une entrée manuelle des informations concernant l'abonné.

8. Système de gestion d'adaptateur de terminal selon la revendication 1, dans lequel l'adaptateur de terminal (TA) dispose d'une fonction de commande de connexion de ligne pour exécuter de manière sélective une fonction arbitraire parmi une fonction de numérotation directe (14), une fonction de numérotation automatique (15) et une fonction de routage (16), et la section de gestion (11) est adaptée aux paramétrages d'assistance associés à la fonction de commande de connexion de ligne de l'adaptateur de terminal (TA).
